# EUROPÄISCHE PATENTSCHRIFT

(11) **EP 3 561 972 B1**
(45) Veröffentlichungstag und Bekanntmachung des Hinweises auf die Patenterteilung: **27.03.2024**
(21) Anmeldenummer: 18172418.8
(22) Anmeldetag: 15.05.2018
(51) Int. Cl.: H02J 3/18, H01H 33/666, H01H 33/664, H01H 79/00

(54) **NETZBEEINFLUSSUNGSANLAGE**
NETWORK INFLUENCING INSTALLATION
INSTALLATION D'INFLUENCE DE RÉSEAU

(30) Priorität: 27.04.2018 EP 18169854
(43) Veröffentlichungstag der Anmeldung: 30.10.2019
(73) Patentinhaber: Siemens Energy Global GmbH & Co. KG, 81739 München (DE)
(72) Erfinder: Battermann, Martin, 90411 Nürnberg (DE); Ernst, Patrik, 96172 Mühlhausen (DE); Haselbauer, Andreas, 91058 Erlangen (DE); Schacherer, Christian, 91352 Hallerndorf (DE)

(56) Entgegenhaltungen:
- CN-A- 105 633 917
- GB-A- 787 846
- US-A- 3 321 598
- US-A- 3 489 873
- US-A- 3 679 474
- US-A- 3 816 798

## Beschreibung

Die Erfindung betrifft eine Netzbeeinflussungsanlage nach dem Oberbegriff des Patentanspruchs 1.

Bei Netzbeeinflussungsanlagen wie zum Beispiel Anlagen zur Steigerung oder Steuerung der Übertragungsleistung von Hochspannungsnetzen wie Serienkompensationsanlagen (engl. Fixed Series Capacitor - FSC) oder bei Lastflussreglern (Universal Power Flow Control - UPFC oder APCU) müssen Schutzeinrichtungen im Falle eines Netzfehlers, zum Beispiel eines Kurz- oder Erdschlusses vorgesehen sein. Der Schutz besteht aus einem Überspannungsableiter und einem Bypass Strompfad, der elektrisch leitend geschlossen wird, wenn ein Netzfehler auftritt. Maßgeblich für die Schutzwirkung ist eine möglichst schnelle Reaktion im Falle eines Netzfehlers. Typischerweise sollte der Bypassstrompfad innerhalb von zwei Millisekunden (ms) geschlossen sein und im Fehlerstrom anschließend über eine Zeit von einigen Sekunden tragen können.

Gemäß des Standes der Technik werden für die beschriebenen beispielhaften Anwendungen meist Leistungshalbleiter oder eine Kombination aus einer Funkenstrecke, eines sogenannten Spark-Gap und Leistungsschaltern eingesetzt. Dabei sind Leistungshalbleiter vergleichsweise kostenintensiv, da sie für den Kurzschlussstrom über eine für sie vergleichsweise lange Zeit ausgelegt werden müssen. Die ebenfalls angewandte parallele Anordnung aus einem Spark-Gap und einem Leistungsschalter benötigt hingegen einen sehr großen Bauraum. Außerdem ist das Spark-Gap durch seine offene Bauweise anfällig gegen Umwelteinflüsse wie beispielsweise das Vereisen oder einer Staubbelastung.

Aus der US 3 489 873 A ist ein Vakuum-Leistungsschalter bekannt, der eine integrierte Spark-Gap-Einrichtung umfasst.

Die CN 105633917 A offenbart einen vereinheitlichten Leistungsflussregler, dessen zweiter Transformator durch eine Kurzschließvorrichtung geschützt ist.

US 3 679 474 A offenbart eine Netzbeeinflussungsanlage eines Energieversorgungsnetzes mit einer stromdurchflossenen Netzbeeinflussungskomponente (eine Last) und mit einer Kurzschließvorrichtung, wobei die Kurzschließvorrichtung einen Leistungsschalter umfasst, wobei der Leistungsschalter ein Vakuum-Leistungsschalter mit einer Vakuum-Leistungsschalterröhre ist,

die eine zumindest teilweise integrierte Vorzündvorrichtung zur aktiven Erzeugung eines Lichtbogens zwischen zwei Kontakten enthält, wobei der Leistungsschalter ein Kontaktsystem mit zwei zu einander translatorisch bewegbare Schaltkontakte aufweist und das Kontaktsystem einen Lichtbogenstrompfad und einen Dauerstrompfad aufweist, die zumindest im Kontaktbereich voneinander geometrisch getrennt sind.

Ferner offenbart US 3 321 598 A einen Leistungsschalter,
der ein Kontaktsystem mit zwei zu einander translatorisch bewegbare Schaltkontakte aufweist, wobei das Kontaktsystem einen Lichtbogenstrompfad und einen Dauerstrompfad aufweist, die zumindest im Kontaktbereich voneinander geometrisch getrennt sind, wobei die Schaltkontakte fingerartige ineinandergreifende Fortsätze aufweisen, die entlang einer Schaltachse ausgerichtet sind.

Die Aufgabe der Erfindung besteht darin, eine Netzbeeinflussungsanlage mit einer Vorrichtung zur Erzeugung eines Bypassstrompfades bereitzustellen, wobei diese Vorrichtung gegenüber dem Stand der Technik weniger Bauraum benötigt und weniger empfindlich gegenüber Umwelteinflüssen ist.

Die Lösung der Aufgabe besteht in einer Netzbeeinflussungsanlage mit den Merkmalen Patentanspruch 1.

Die erfindungsgemäße Netzbeeinflussungsanlage nach Anspruch 1 dient zur Beeinflussung eines Energieversorgungsnetzes und weist dabei einerseits eine stromdurchflossenen Netzbeeinflussungskomponente und andererseits eine Kurzschließvorrichtung auf. Die Kurzschließvorrichtung umfasst dabei einen Leistungsschalter, wobei dieser als Vakuum-Leistungsschalter mit einer Vakuum-Leistungsschalterröhre ausgebildet ist. Die Vakuum-Leistungsschalterröhre umfasst dabei eine Vorzündeinrichtung zur aktiven Erzeugung eines Lichtbogens zwischen zwei Kontakten.

Einen Vakuum-Leistungsschalter umfasst dabei eine modifizierte Vakuum-Leistungsschalterröhre und einen Antrieb. Die Vorzündeinrichtung ist zumindest teilweise in der Vakuum-Leistungsschalterröhre angeordnet, und erzeugt bei Auftreten eines Netzfehlers einen Lichtbogen entlang eines Lichtbogenstrompfades zwischen zwei Kontakten der Röhre. Dieser Lichtbogen ist für einige Millisekunden stromtragend, solange die mechanischen Kontakte der Leistungsschalterröhre benötigen, um mechanisch zusammen zu fahren und somit einen Dauerstrompfad herzustellen. Das bedeutet, dass ein Bypassstrompfad bei Auftreten eines Netzfehlers so schnell geschlossen ist, dass die Netzbeeinflussungskomponente an der Netzbeeinflussungsanlage keinen Schaden nehmen. Dies wird durch den beschriebenen Vakuum-Leistungsschalter gewährleistet.

Gegenüber dem Stand der Technik weist die beschriebenen Netzbeeinflussungsanlage den Vorteil auf, dass die zur Anwendung kommende Kurzschließvorrichtung nämlich der Vakuum-Leistungsschalter, in der Lage ist, in einem integrierten Gerät auf engen Bauraum, kostengünstig und von Umgebungseinflüssen geschützt eine entsprechende Schutzwirkung der Beeinflussungskomponenten zu erzeugen.

Gemäß der Erfindung weist die Leistungsschalter Röhre ein Kontaktsystem mit den zwei bereits erwähnten Kontakten auf, wobei diese Kontakte zu einander translatorisch bewegbar sind. Dabei ist das Kontaktsystem in derart ausgestaltet, dass es einerseits den Lichtbogenstrompfad aufweist und dass es andererseits einen Dauerstrompfad umfasst, wobei diese beiden Strompfade zumindest im Kontaktbereich voneinander geometrisch getrennt sind, wobei die Schaltkontakte fingerartige ineinandergreifende Fortsätze aufweisen, die entlang einer Schaltachse ausgerichtet sind.

Die Trennung des Lichtbogenstrompfades vom Dauerstrompfad bewirkt, dass Kontaktflächen des Dauerstrompfades nicht durch die Ausbildung eines Lichtbogens bezüglich ihrer Oberfläche belastet sind. Der Lichtbogenstrompfad nimmt einen anderen geometrischen Verlauf als der Dauerstrompfad. Beim Schließen des Kontaktesystems zum Aufbau des Dauerstrompfades entsteht zwischen diesen beiden Kontaktflächen bevorzugt kein Lichtbogen weshalb zwischen den Kontaktflächen des Dauerstrompfades keine Aufschmelzungen und keine Verschweißungen entstehen. Derartige Verschweißungen würden beim Wiederöffnen des Kontaktesystems zu Oberflächenbeschädigungen führen, die wiederum das zwischen den Kontakten vorherrschende elektrische Feld negativ beeinflussen könnten. Bevorzugt bleiben auch in im geschlossenen Zustand Kontaktflächen des Lichtbogenstrompfades berührungslos. Die Kontaktflächen des Lichtbogenstrompfades sind von den Kontaktflächen des Dauerstrompfades wie erwähnt, bevorzugt geometrischen getrennt.

In einer weiteren Ausgestaltungsform weist die Vorzündeinrichtung eine Zündelektrode zur Zündung des Lichtbogens entlang des Lichtbogenstrompfades auf. Die Zündelektrode dient dazu, bei Eintreffen eines Zündsignals einen Lichtbogen auszubilden. Dazu umfasst die Vorzündeinrichtung bevorzugt auch eine Zündelektronik, die gegebenenfalls auch außerhalb der Leistungsschalterröhre angeordnet sein kann.

Weitere Ausgestaltungsformen der Erfindung und weitere Merkmale werden anhand der folgenden Figuren näher erläutert. Dabei handelt es sich um rein exemplarische Ausgestaltungsformen, die keine Einschränkung des Schutzumfangs darstellen. Merkmale mit derselben Bezeichnung aber unterschiedlichen Ausgestaltungsformen, werden dabei mit demselben Bezugszeichen versehen.

Dabei zeigen:
- Figur 1: schematisches Schaltbild einer Netzbeeinflussungsanlage in Form eines vereinheitlichten Leistungsflussreglers bzw. Unified-Power-Flow-Controller,
- Figur 2: schematisches Schaltbild einer Netzbeeinflussungsanlage in Form einer Serienkompensationsanlage,
- Figur 3: ein Kontaktsystem mit zwei Kontakten mit Kontaktfingern in geöffneten Zustand,
- Figur 4: das Kontaktsystem aus Figur 1 im geschlossenen Zustand,
- Figur 5: eine Vakuum-Leistungsschalterröhre, die nicht Teil der Erfindung ist, mit einem Kontaktsystem und einem topfförmigen Kontakt mit einer im Zentrum angeordneten, translatorisch bewegbaren Zündelektrode,
- Figur 6: eine Vakuum-Leistungsschalterröhre gemäß Figur 5 mit einer axial verschobene Zündelektrode und gezündeten Lichtbogen.
- Figur 7: eine Vakuum-Leistungsschalterröhre gemäß Figur 6 mit eine einem geschlossenen Kontaktsystem

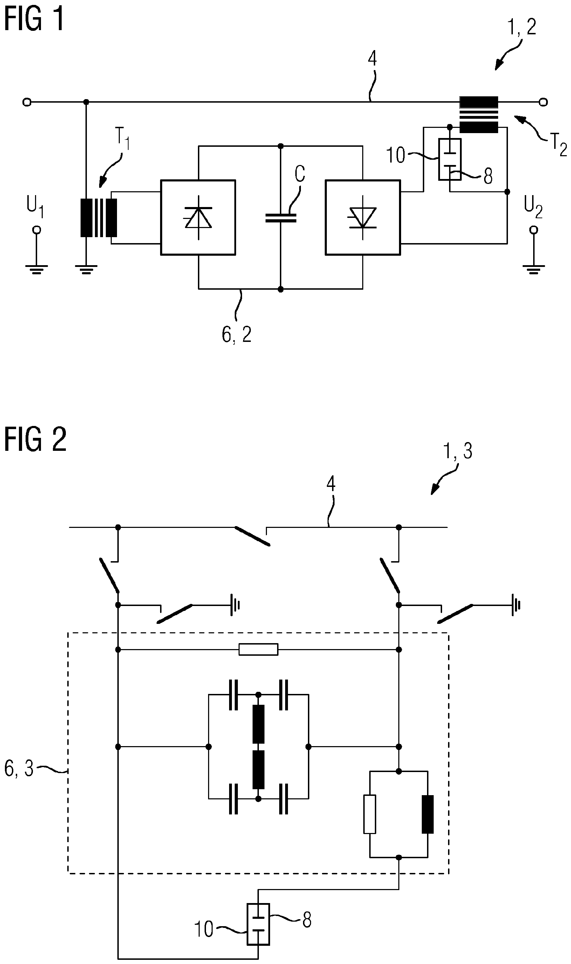

In Figur 1 ist ein Prinzipschaltbild einer Netzbeeinflussungsanlage in Form eines vereinheitlichten Leistungsflussreglers 2, auch Unified-Power-Flow-Controller (UPFC) dargestellt. Bei einem Leistungsflussregler 2 handelt es sich um eine Netzbeeinflussungsanlage 1, die dazu dient, in überregionalen und vermaschten Stromnetzen die übertragene elektrische Leistung in einzelnen Leitungen wie Freileitungen gezielt steuern und beeinflussen zu können. Mit Leistungsflussreglern 2 können so in vermaschten Netzen gezielt bestimmte, vertraglich vereinbarte Leistungsdurchleitungen erfüllt werden.

Auf die Wirkungsweise des Leistungsflussreglers 2 soll an dieser Stelle nicht näher eingegangen werden. Es sei lediglich gesagt, dass mithilfe von Transformatoren T1 Energie aus dem Stromnetz 4 abgezweigt wird, mithilfe von Umrichtern von Wechselstrom in Gleichstrom umgewandelt wird und wieder in Wechselstrom gewandelt wird, umso über einen zweiten Transformator T2 durch die Veränderung des Phasenwinkels zwischen Strom und Spannung die Impedanz im Netz zu beeinflussen. Für einen Kurzschlussfall muss jedoch eine Kurzschließvorrichtung 8 vorgesehen sein, die hier in Form eines Leistungsschalters 10 ausgestaltet ist. Auf die Wirkungsweise des Leistungsschalters 10 wird im Weiteren noch eingegangen werden.

In Figur 2 ist ein Prinzipschaltbild einer Netzbeeinflussungsanlage 1 in Form einer Serienkompensationsanlage 3 dargestellt, auf deren Wirkungsweise ebenfalls nur kurz eingegangen wird. In einem Übertragungssystem ist die maximale Höhe der Wirkleistung, die über eine Leitung oder über Kabel übertragen werden kann, umgekehrt proportional zum Blindwiderstand der Linie. Indem man den Blindwiderstand mit einem Serienkondensator bis zu einem gewissen Grad ausgleicht, kann eine elektrisch kürzere Strecke realisiert und eine höhere Übertragung von Wirkleistung erreicht werden. Da der Serienkompensator selbstregulierend ist - d.h. die Leistung ist direkt (und ohne Überwachung) proportional zum Netzstrom - gleicht er den Spannungsfall aus, der am Blindwiderstand entsteht. Dadurch wird die Spannungsstabilität im Übertragungsnetz erhöht. Auch die Serienkompensationsanlage 3 benötigt eine entsprechende Kurzschließvorrichtung, die im Falle eines Netzfehlers oder eines Kurzschlusses im Netz die Serienkompensationsanlage sehr schnell vom Netz trennt und somit die Anlage vor größeren Schäden schützt. Auch in der Serienkompensationsanlage kommt eine Kurzschließvorrichtung zum Einsatz, die einen Schalter umfasst, der im Weiteren näher erläutert wird.

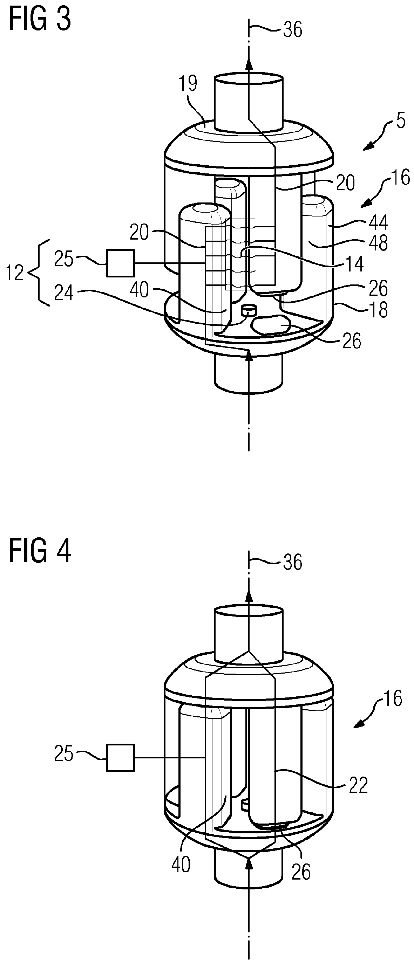

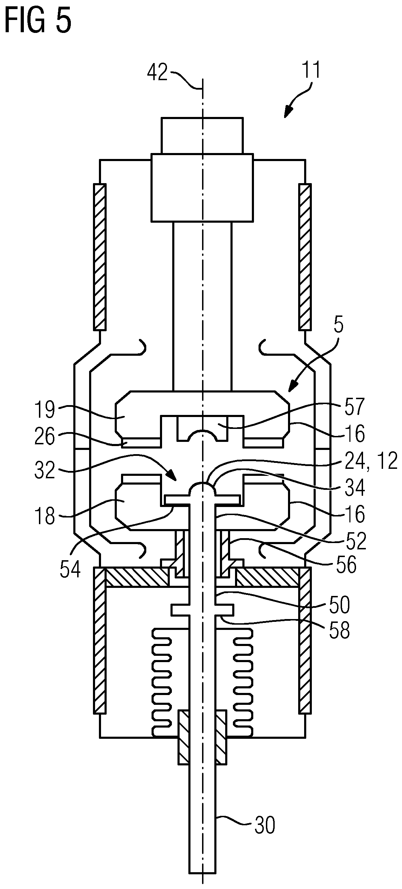

In den Figuren 3 und 4 ist jeweils ein Kontaktsystem 5 einer Vakuums-Leistungsschalterröhre 2 dargestellt. Der Einfachheit halber ist in diesen Figuren lediglich das Kontaktsystem 5 gezeigt, ein grundsätzlicher schematischer Querschnitt durch eine Vakuum-Leistungsschalterröhre 11 ist in den Figuren 5-7 gegeben. Grundsätzlich ist das Kontaktsystem 5 gemäß der Figuren 3 und 4 in analoger Anwendung auch Bestandteil einer Vakuum-Leistungsschalterröhre 11 gemäß Figur 5.

Die Vakuum-Leistungsschalterröhre 11, weist dabei ein Gehäuse 4 auf, das in den Figuren 3 und 4 wie bereits dargelegt, der Einfachheit halber nicht dargestellt ist. In diesem Gehäuse 13 liegt ein Vakuum vor, was bedeutet, dass in diesem Bereich ein gegenüber dem Atmosphärendruck erniedrigter Druck vorherrscht, bevorzugt liegt ein Hochvakuum (weniger als 10⁻³ hPa) vor. In der beschriebenen Vakuum-Leistungsschalterröhre 2 liegt im Gegensatz zu gasisolierten Leistungsschaltern kein Löschgas oder kein Isoliergas vor.

Das Kontaktsystem 5 weist zwei Kontakte auf, grundsätzlich könnten beide Kontakte als Bewegkontakt ausgestaltet sein, in der Regel wird jedoch nur ein Kontakt 18 als Bewegkontakt ausgestaltet, ein zweiter Kontakt ist ein Festkontakt 19. Dabei ist der Bewegkontakt 18 mit einem hier nicht dargestellten Antrieb verbunden. Die Kontakte 18 und 19 in den Figuren 3 und 4 weisen dabei fingerartige ineinandergreifende Fortsätze 44 auf, die entlang einer Schaltachse 36 ausgerichtet sind. In den Beispielen der Figuren 1 und 2 sind von jedem Kontakt drei fingerartige Fortsätze 44 dargestellt, grundsätzlich kann die Anzahl selbstverständlich variieren. Es kann auch zweckmäßig sein, dass jeder Kontakt 18,19 lediglich einen Fortsatz 44 aufweist, dieser kann dann beispielsweise jeweils einen halbringförmigen Querschnitt aufweisen.

Ferner ist die Vakuum-Leistungsschalterröhre mit einer Vorzündeinrichtung 12 ausgestattet, wobei die Vorzündeinrichtung 12 zumindest eine Zündelektrode 24 aufweist und bevorzugt eine Zündelektronik 25, die im Falle eines Kurzschluss, wenn der Schalter sehr schnell geschlossen werden muss, ein elektrisches Signal an die Zündelektrode 24 liefert. Die bewirkt, dass im Bereich von Kontaktflächen 40 für einen sogenannten Lichtbogenstrompfad 20 elektrische Ladungen anliegen und es zu einem lichtbogenförmigen Überschlag zwischen zwei Kontaktflächen 40 kommt. Beim Auftreten eines Netzfehlers wird somit zunächst der Kontakt durch den, wie beschrieben, gezündeten Lichtbogen 14 überbrückt. Während der Lichtbogen 14 den Strom leitet, werden dann die Kontakte 18 und 19 durch den mechanischen Antrieb mechanisch geschlossen, wobei es zum Kontakt zwischen Kontaktflächen 26 eines Dauerstrompfades 22 kommt.

Diese Abfolge ist daher zweckmäßig, da der Lichtbogen 14 schneller (in der Regel in weniger als 4 ms) gezündet werden kann und somit für eine kurze Zeit über diesen der Strom fließen kann, bis der langsamere mechanische Kontakt 18, 19 geschlossen ist.

Auf diese Weise wird integriert in einer Vakuumleistungsschalterröhre 11 eine gleiche Wirkung erzielt, wie dies gemäß des Standes der Technik aus der Kombination eines sogenannten Spark-Gaps mit einem Leistungsschalter der Fall ist. Es wird jedoch durch die beschriebene Konstruktion ein deutlich geringerer Bauraum benötigt, gleichzeitig ist die Vakuum-Leistungsschalterröhre 11 deutlich weniger anfällig gegenüber Umwelteinflüssen wie, dass beispielsweise ein sogenannter Spark-Gap ist.

Grundsätzlich wäre es möglich, den Lichtbogenstrompfad 20 und den Dauerstrompfad 22 geometrisch zu vereinen. Das heißt der Lichtbogen 14 könnte zwischen zwei plattenförmig ausgestalteten Kontaktflächen 26 der Kontakte 18 und 19 erfolgen. Durch das Ausbrennen der Kontaktflächen 26 mit dem Lichtbogen 14 entsteht jedoch an der Oberfläche eine Schmelzzone, so dass beim Schließen der Kontakte 18 und 19 die Kontaktflächen 26 miteinander verschweißen können. Beim Wiederöffnen wird diese Verschweißung aufgerissen und es entstehen spitze oder scharfkantige Oberflächenrauhigkeiten, die das elektrische Feld beim Öffnen und Schließen der Kontakte 18 und 19 negativ beeinflussen können. Aus diesem Grund ist es zweckmäßig, dass wie in den Figuren 3 und 4 dargestellt, der Lichtbogenstrompfad 20 vom Dauerstrompfad 22 geometrisch getrennt ist.

Der Lichtbogenstrompfad 20 ist in Figur 3 dargestellt. Er verläuft entlang der Fortsätze 44 und der Lichtbogenstrompfad 20 springt dann über Flanken 46 der Fortsätze 44 an Kontaktflächen 24 des Lichtbogenstroms 20 der korrespondierenden Flanke 46 und der korrespondierenden Kontaktfläche 24 über. In Figur 4 ist der geschlossene Zustand des Kontaktsystems 5 dargestellt der Lichtbogen 14 zwischen den Flanken 46 ist erloschen, der Strom fließt über den Dauerstrompfad 22, wobei sich die Kontaktflächen 26 der beiden Kontakte 18 und 19 berühren. Dieser Stromfluss ist nun dauerhaft stabil.

Gegenüber dem Stand der Technik wird hierbei in einem Schalter integriert zunächst ein Lichtbogen geschaltet, der sehr schnell zu einem Stromfluss führt, bis der langsamere mechanische Schaltvorgang über den Dauerstrompfad bereitgestellt ist. Der Dauerstrompfad 22 und der Lichtbogenstrompfad 18 sind hierbei geometrisch voneinander getrennt, was durch Anordnung der fingerartigen Fortsätze 44 gestaltet werden kann. Im geschlossenen Zustand des Kontaktsystems 5 sind die Kontaktflächen 24 für den Lichtbogenstrompfad 18 nicht miteinander in Berührung. Somit kommt es auch zu keinem Verschweißen zwischen den einzelnen Kontaktflächen 24 des Lichtbogenstrompfades.

In den Figuren 3 und 4 ist ein Kontaktsystem gezeigt, bei dem der Lichtbogen 14 rein elektrisch über die Zündelektroden 24 durch Anlegen eines entsprechenden Stromes oder einer Spannung gezündet wird. Zur Übermittlung eines Signales, dass diese Bereitstellung des Stromes oder Spannung an der Zündelektroden 24 auslöst, dient die Zündelektronik 25. Diese ist nicht notwendigerweise in die Vakuum Leistungsschalterröhre 11 integriert. Sowohl die Zündelektroden 24 als auch die Zündelektronik 25 sind Bestandteil der Vorzündeinrichtung 12. In den Figuren 5-7 ist nun eine alternative Möglichkeit dargestellt, den Lichtbogen zu erzeugen. Hierbei handelt es sich um ein mechanisches System, wobei der Lichtbogen gezündet wird, in dem die Zündelektrode 24 sehr schnell in Richtung des Gegenkontaktes bewegt wird und somit eine Feldüberhöhung eintritt, die zur Zündung des Lichtbogens führt. Auch die Vorzündeinrichtung gemäß der Figuren 5-7 weist dabei bevorzugt neben der vor Zündelektroden auch eine Vorzündelektronik auf.

Die Leistungsschalterröhre 2 gemäß Figur 5 umfasst ebenfalls zwei Kontakte eines alternativen Kontaktsystems 16, mit einem Bewegkontakt 18 und einem Festkontakt 19, wobei diese Kontakte vom Querschnitt gesehen topfförmig ausgestaltet sind. Das bedeutet, dass sie in ihrem Zentrum eine Vertiefung 32 aufweisen. In der Vertiefung 32 des Bewegkontaktes 18 ist ein Vorzündkontakt 34 angeordnet. Dieser Vorzündkontakt 34 stellt die Zündelektrode 24 dar. Der Vorzündkontakt 34 berührt dabei vorzugsweise nicht ein Gegenstück 57 im Festkontakt 19, um Verschweißungen zu vermeiden.

Der Vorzündkontakt 34 ist mit einer Schubstange 50 verbunden, die durch eine Bohrung 52 im Kontaktboden 54 des topfförmigen Bewegkontaktes 18 eingebracht ist und dort bewegbar entlang einer Schaltachse 42 gelagert ist. Ferner umfasst die Leistungsschalterröhre 11 ein Schubrohr 56, das durch einen Mitnehmer 58 am Kontaktbolzen 10 oder an der Schubstange 18 an die Bewegung des Kontaktbolzens 10 mechanisch koppelbar ist. Durch diese Koppelung wird nun die translatorische Bewegung des Bewegkontaktes 18 in Richtung des Festkontaktes 19 bewirkt.

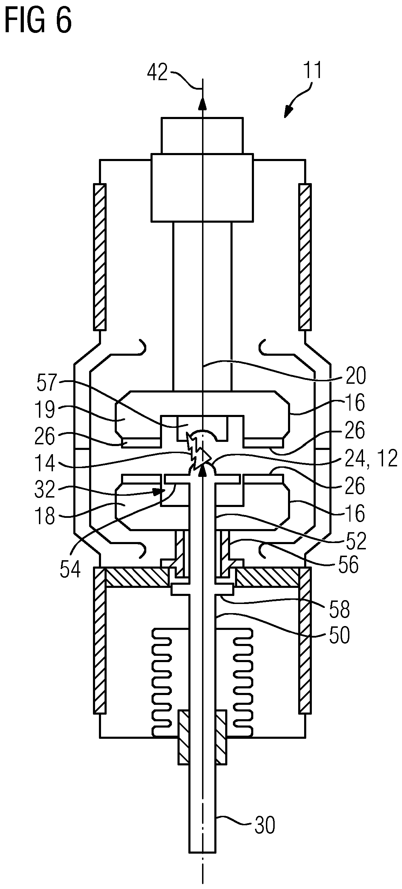

Zunächst fährt der Kontaktbolzen 30 in Figur 5 in der dargestellten Ansicht nach oben. Dies bedeutet in der Darstellung gemäß Figur fünf entgegen der Schwerkraft, eine analoge Konstruktion in entgegengesetzter Richtung, entlang der Schwerkraft ist ebenfalls zweckmäßig. Dabei wird zunächst durch den Kontaktbolzen 30 der Vorzündkontakt 34 bewegt, wobei zu bemerken ist, dass der Vorzündkontakt 34 eine deutlich geringere Masse aufweist als das System des Bewegkontaktes 18 und des Schubrohres 56. Somit bewegt sich der Vorzündkontakt 34 in Richtung seines Gegenstückes 57 wobei, wie in Figur 6 dargestellt, beim Heraustreten des Vorzündkontakt 34 aus einer Schirmwirkung des Bewegkontaktes 18 bzw. aus der Vertiefung 32 ein Lichtbogen 14 zündet. Diese Bewegung läuft bei geeigneter Einstellung in wenigen Millisekunden ab. So ist es möglich, dass nach circa 1 - 3 Millisekunden der Lichtbogenstrompfad 32 zur Leitung eines elektrischen Stromes über den Lichtbogen 14 durch die Leistungsschalterröhre 11 erfolgt. Hierfür sind entsprechende schnelle Antriebe bevorzugt prellfreier Antrieb vorteilhaft, die hier nicht dargestellt sind, aber aus dem Stand der Technik bekannt sind. Diese wiederum können in den genannten Zeitbereichen eine Bewegung des Vorzündkontaktes 34 und einer Ausbildung des Lichtbogens 14 gewährleisten. Ein prellfreier Antrieb kann insbesondere dadurch erzielt werden, dass die kinetische Energie des Bewegkontaktes beim Auftreffen auf den Festkontakt in einer hier nicht dargestellten Federvorrichtung der Antriebseinheit (hierrunter fallen mechanische Federn oder Gasdruckfedern) zwischengespeichert oder in eine andere Energieform wie Wärme umgewandelt wird.

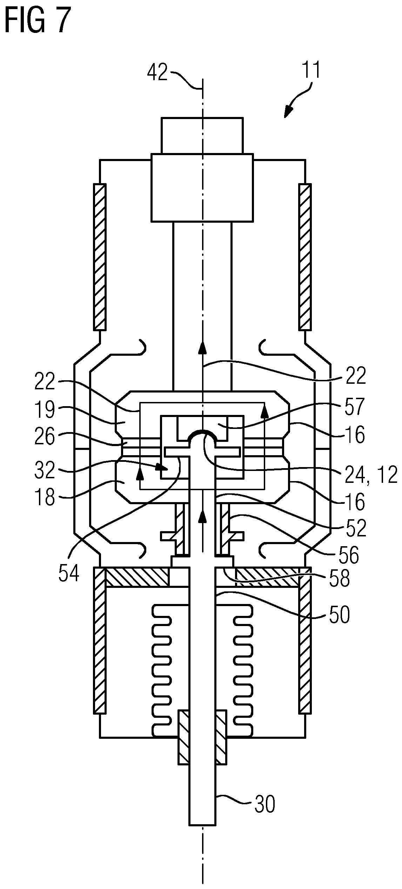

In Figur 6 ist nun der nächste Schritt dargestellt. Der Kontaktbolzen 30 bzw. die Mitnehmervorrichtung 58 hat nun auch das Schubrohr 56 bei seiner translatorischen Bewegung erreicht und schiebt darauffolgend den Bewegkontakt 18 in Richtung des Festkontaktes 19, so dass die Kontaktflächen 26 der Kontakte 18 und 19 aufeinander liegen und es zu einem Fluss eines Dauerstromes kommt (Figur 7). Über einen Dauerstrompfad 22 können je nach Anwendung der Leistungsschalterröhre 11 und je nach Betriebssituationen auch Fehler oder Kurzschlussströme fließen.

### Bezugszeichenliste

- 1: Netzbeeinflussungsanlage
- 2: Leistungsflussregler
- 3: Serienkompensationsanlage
- 4: Energieversorgungsnetz
- 5: Kontaktsystem
- 6: Netzbeeinflussungskomponente
- 8: Kurzschließvorrichtung
- 10: Vakuum-Leistungsschalter
- 11: Vakuum-Leistungsschalterröhre
- 12: Vorzündeinrichtung
- 13: Gehäuse
- 14: Lichtbogen
- 16: Kontaktsystem
- 18: Bewegkontakt
- 19: Festkontakt
- 20: Lichtbogenstrompfad
- 22: Dauerstrompfad
- 24: Zündelektrode
- 25: Zündelektronik
- 26: Kontaktflächen
- 30: Kontaktbolzen
- 32: Vertiefung
- 34: Vorzündkontakt
- 36: Schaltachse
- 38: Kontaktstück
- 40: Kontaktfläche LBSP
- 42: Schaltachse
- 44: fingerartige Fortsätze
- 46: Dampfschicht
- 48: Flanken
- 50: Schubstange
- 52: Bohrung
- 54: Kontaktboden
- 56: Schubrohr
- 57: Gegenstück
- 58: Mitnehmer

## Patentansprüche

1. Netzbeeinflussungsanlage eines Energieversorgungsnetzes (4) in Form eines vereinheitlichten Leistungsflussreglers (2) mit einer stromdurchflossenen Netzbeeinflussungskomponente (6) und einem ersten Transformator zur Energieabzweigung aus dem Stromnetz, mindestens einen Wechselrichter und einem zweiten Transformator zur Veränderung des Phasenwinkels zwischen Strom und Spannung im Netz und mit einer Kurzschließvorrichtung (8), wobei die Kurzschließvorrichtung (8) einen Leistungsschalter (10) umfasst, **dadurch gekennzeichnet, dass** der Leistungsschalter (10) ein Vakuum-Leistungsschalter mit einer Vakuum-Leistungsschalterröhre ist, die eine zumindest teilweise integrierte Vorzündvorrichtung (12) zur aktiven Erzeugung eines Lichtbogens (14) zwischen zwei Kontakten (19, 34) enthält, wobei der Leistungsschalter (10) ein Kontaktsystem (16) mit zwei zueinander translatorisch bewegbare Schaltkontakte (18, 19) aufweist und das Kontaktsystems einen Lichtbogenstrompfad (20) und einen Dauerstrompfad (22) aufweist, die zumindest im Kontaktbereich voneinander geometrisch getrennt sind, wobei die Schaltkontakte fingerartige ineinandergreifende Fortsätze (44) aufweisen, die entlang einer Schaltachse (36) ausgerichtet sind.

2. Netzbeeinflussungsanlage nach Anspruch 1, **dadurch gekennzeichnet, dass** die Vorzündvorrichtung (12) mit einer Zündelektrode (24) zur Zündung des Lichtbogens (14) entlang eines Lichtbogenstrompfades (20) versehen ist.

3. Netzbeeinflussungsanlage nach einem der Ansprüche 1 oder 2, **dadurch gekennzeichnet, dass** Kontaktflächen (26) des Lichtbogenstrompfades (20) in einem geschlossenem Zustand des Leistungsschalters (10) berührungslos zueinander angeordnet sind.

## Claims

1. Grid influencing system of a power supply grid (4) in the form of a unified power flow controller (2) comprising a current-conducting grid influencing component (6) and a first transformer for tapping off energy from the electricity grid, at least one inverter and a second transformer for altering the phase angle between current and voltage in the grid, and comprising a short-circuiting device (8), wherein the short-circuiting device (8) comprises a circuit breaker (10), **characterized in that** the circuit breaker (10) is a vacuum circuit breaker comprising a vacuum circuit breaker tube containing an at least partly integrated pre-arcing device (12) for actively generating an arc (14) between two contacts (19, 34), wherein the circuit breaker (10) has a contact system (16) comprising two switching contacts (18, 19), which are movable translationally with respect to one another, and the contact system has an arc current path (20) and a continuous current path (22), which are geometrically separated from one another at least in the contact region, wherein the switching contacts have fingerlike, intermeshing extensions (44) oriented along a switching axis (36).

2. Grid influencing system according to Claim 1, **characterized in that** the pre-arcing device (12) is provided with an ignition electrode (24) for igniting the arc (14) along an arc current path (20).

3. Grid influencing system according to either of Claims 1 and 2, **characterized in that** contact surfaces (26) of the arc current path (20) in a closed state of the circuit breaker (10) are arranged with no contact with respect to one another.

## Revendications

1. Installation d'influence de réseau d'un réseau (4) d'alimentation en énergie, sous la forme d'un régleur (2) unifié de flux de puissance comprenant un composant (6) d'influence de réseau parcouru par du courant et un premier transformateur pour dériver de l'énergie du réseau de courant, au moins un onduleur et un deuxième transformateur pour modifier l'angle de phase entre courant et tension dans le réseau, et comprenant un dispositif (8) de court-circuit, dans laquelle le dispositif (8) de court-circuit comprend un interrupteur (10) de puissance, **caractérisé en ce que** l'interrupteur (10) de puissance est un interrupteur de puissance à vide ayant un tube interrupteur de puissance à vide, qui contient un dispositif (12) de pré-amorçage, intégré au moins en partie, pour la production active d'un arc (14) électrique entre deux contacts (19, 34), dans laquelle l'interrupteur (10) de puissance a un système (16) de contact ayant deux contacts (18, 19) de commutation mobiles en translation l'un par rapport à l'autre et le système de contact a un chemin (20) de courant d'arc électrique et un chemin (22) de courant permanent, qui sont séparés géométriquement l'un de l'autre au moins dans la zone de contact, dans laquelle les contacts de commutation ont des prolongements (44) de type en doigt pénétrant l'un dans l'autre, qui sont dirigés suivant un axe (36) de commutation.

2. Installation d'influence de réseau suivant la revendication 1, **caractérisée en ce que** le dispositif (12) de pré-amorçage est pourvu d'une électrode (24) d'amorçage pour l'amorçage de l'arc (14) électrique le long d'un chemin (20) de courant d'arc électrique.

3. Installation d'influence de réseau suivant la revendication 1 ou 2, **caractérisée en ce que** des surfaces (26) de contact du chemin (20) de courant d'arc électrique sont, dans un état fermé de l'interrupteur (10) de puissance, sans contact les unes avec les autres.
